# EUROPEAN PATENT SPECIFICATION

(11) **EP 3 257 917 B1**
(45) Date of publication and mention of the grant of the patent: **18.09.2019**
(21) Application number: 15881436.8
(22) Date of filing: 04.05.2015
(51) Int. Cl.: C10G 5/04, C10G 33/06, C10K 1/00, C10K 1/18, C02F 1/40, B01D 17/022, B01D 17/038, B01D 39/02, B01D 17/00

(54) **STEP-BY-STEP OIL-WATER MIXTURE SEPARATION METHOD COUPLED WITH OIL GAS WASHING**
VERFAHREN ZUR SCHRITTWEISE TRENNUNG EINES ÖL-WASSER-GEMISCHS MIT ÖLGASWÄSCHE
PROCÉDÉ DE SÉPARATION DE MÉLANGE PÉTROLE-EAU ÉTAPE PAR ÉTAPE COUPLÉ AU LAVAGE DE GAZ DE PÉTROLE

(30) Priority: 09.02.2015 CN 201510066985
(43) Date of publication of application: 20.12.2017
(73) Proprietor: East China University Of Science And Technology, Shanghai 200237 (CN)
(72) Inventor: YANG, Qiang, Shanghai 200237 (CN); LU, Hao, Shanghai 200237 (CN); XU, Xiao, Shanghai 200237 (CN); LIU, Sen, Shanghai 200237 (CN); WANG, Chaoyang, Shanghai 200237 (CN)
(74) Representative: Altunkaya, Muhammed
(86) International application number: PCT/CN2015/000303
(87) International publication number: WO 2016/127274

(56) References cited:
- CN-A- 102 392 612
- CN-A- 103 706 149
- CN-A- 103 952 852
- CN-U- 202 625 893
- US-A1- 2005 173 337
- US-A1- 2005 284 290
- US-A1- 2013 109 768

## Description

### Technical Field

This invention involves the field of petroleum refining or coal chemical industry. In particular, the instant invention relates to a method for oil-water stepwise separation by oil-gas washing in Fischer-Tropsch process.

### Background

Fischer-Tropsch synthesis is one of indirect coal liquefaction technologies and can be named as FT reaction. It is a technological process taking synthesis gas (CO and H₂) as raw material to synthesize paraffin hydrocarbon-based liquid fuel under conditions of catalyst (mainly iron-based catalyst) and proper reaction. Products of Fischer-Tropsch synthesized coal-to-liquids mainly include gasoline, diesel oil, coal oil, aircraft fuel, aircraft fuel and paraffin etc. Fischer-Tropsch synthesized indirect coal liquefaction product is oil water mixture. Efficient oil-water separation has great influence on the reduction of product cost.

Currently, the gravity settler is mainly adopted for separation in Fischer-Tropsch synthesis (Process Design and Chemical Engineering Design of Oil-water Separator in Fischer-Tropsch Synthesis, 2010, 20 (1)). Water-cut oil and oily water are separated through settling action of high-pressure separator after coming out of the reactor, and enter into horizontal-type oil-water separator for further settling separation and into big post for next settling separation. Due to operating conditions of Fischer-Tropsch synthesis, oil-water emulsification is relatively serious. Because gravity settling separation is only able to separate free-state oil drop or water droplets with grain size larger than 50µm, generally design time of static settling separation in big pot after primary oil-water separation exceeds 8 hours. The device occupies a large area and costs a lot of materials but has low efficiency. Besides, gaseous component discharged after low-pressure separation in technological process also contains a few hydro carbons. Generally washing device is arranged separately for washing and recycling. It is required to equip an operation control system that is relatively complicated and takes much cost. Thus, it is necessary to adopt efficient oil-water separation method to optimize current technology.

The invention disclosed in CN 103706149A belongs to the field of petrochemical engineering oil-water separation, and discloses a device for high-efficiently separating two-phase non-homogeneous mixed liquid such as petrochemical oil, water/acid/alkali and the like in a modularization manner. The modularization combination high-efficient separation device comprises a shell and an inner member, wherein the inner member consists of a fluid distribution and rectifying section, a coarsening part, an intensifying settling separation part and a nano fiber coalescence separation part. The shell is provided with a mixed liquid inlet part, a light-phase outlet part and a heavy-phase outlet part. The inner member is combined according to the ratio of the dispersion phase in the mixed liquid and the separation efficiency requirement, and the shallow-pool principle, the coarsening technology and the nano modified fiber high-efficiency coalescence technology are combined in a modularization concept, so that the non-homogeneous mixed liquid separation efficiency is high, and the adaptability in the application range is high.

### Summary of the Invention

In consideration of the foregoing problems, this invention provides a method of oil-water stepwise separation by oil-gas washing in Fischer-Tropsch process. Through combination with features of Fischer-Tropsch synthesized oil-water and stepwise separation method, it is divided into primary separation and in-depth stepwise separation according to the granulometric distribution of oily water and water-cut oil. The more optimized is that primary oil dewatering and water deoiling are realized in one device that occupies smaller area and requires less auxiliary systems. Moreover, washing and recycling settings are arranged in inlet coupling. It satisfies fast separation of oil and water. At the same time, it reduces land occupation and investment effectively and makes up shortcomings of current gravity settling separation method.

This instant invention provides a method of stepwise oil-water separation by oil-gas washing in Fischer-Tropsch process comprising the steps of:
1) after mixed washing of light oil containing 0.5 to 6% synthesized water (flow rate is 1 to 3m/s at the entrance) and low gas containing 0.01 to 2.8% trace hydrocarbon, feeding light oil containing trace hydrocarbon into left-side end socket of primary oil-water separator and sending sewage containing 0.05 to 0.5% oil to the right-side end socket of primary oil-water separator, wherein the operating pressure of primary oil-water separator is 0.3 to 4.5MPa and the temperature is 20 to 60°C;
2) after each component in step 1 enters into the primary oil-water separator, realizing fast liquid-gas separation in the T-shaped liquid-gas separator, wherein the the low gas separated is discharged from the top of the primary oil-water separator; wherein
water containing light oil flows from the right-side end socket of the primary oil-water separator towards right at the velocity of 0.005-0.02 m/s, and undergoes fast dehydration by successive going through the first CPI oil-water fast separation module and hydrophilic droplet agglomeration module to isolate water droplets with particle size larger than 30µm, wherein light oil after separation only contains 0.05-0.5% water and continues to flow towards right side to be discharged from the left side of a partition plate and then enters into an in-depth dehydrator, wherein water droplets with 3-30µm particle size are removed in in-depth dehydrator to get light oil with water content less than 0.02%; and
oil sewage flows from the right-side end socket of primary oil-water separator towards left and passes through the second CPI oil-water fast separation module and oleophilic droplet agglomeration module successively for rapid oil removal, wherein oil droplets with particle size larger than 25µm are separated, and sewarge contains 0.03-0.6% oil after separation and continues to flow towards left to the right side of the partition plate and is discharged from the upper part of the partition plate together with the light oil separated after the left side of the partition plate and enters into the in-depthin-depth oil eliminator, in which oil droplets with 1-25µm particle size is removed. Till now the oil content in sewage is less than 0.01%.

The In-depth dehydrator in step 2 contains conjugated fiber water removal module including hydrophilic fiber and oleophilic fiber. The amount of hydrophilic fiber is 5-15% of that of the oleophilic fiber in the conjugated fiber water removal module. The in-depth oil eliminator contains conjugated fiber oil removal module including hydrophilic fiber and oleophilic fiber. The amount of oleophilic fiber is 10-20% of that of hydrophilic fiber in conjugated fiber oil removal module.

The light oil and low gas are mixed in step 1) in a direction that is the same with or opposite to the flowing direction of oil and gas. Conventional gas-liquid mixer is set after injection.

The flow rate of the oil-water mixture at entrance of the T-shaped liquid-gas separator in step 2) is from 3 to 6m/s. Water drum exists between the first CPI oil-water fast separation module and hydrophilic droplet agglomeration module in step 2). The second CPI oil-water fast separation module and oleophilic droplet agglomeration module are connected with each other.

The hydrophilic droplet agglomeration module and the first and second CPI fast separation modules in step 2) are made of modified Teflon, polypropylene or stainless steel material.

There is water drum existing in the bottom of in-depth dehydrator in step 2) and conjugated fiber oil removal module is set at the exit. There is water drum existing in the top of in-depth oil eliminator and conjugated fiber water removal module is set at the exit.

Conjugate fiber module built in the above mentioned in-depth dehydrator or in-depth oil eliminator adopts the patent weaving method (for weaving Ω model fiber applicable to deep separation of oil and water) in Chinese patent publication CN103952852A.

Wherein oil-water fast separation module of CPI (efficient coalescence-separation of corrugated plate) selects perforated corrugated plate with lipophilic and hydrophobic property (or hydrophilic and oleophobic property applicable to dehydration process) on the surface to make efficient combination of "principles of shallow pool" and "coalescence technology" as shown in DrawingDrawing 1; when oily sewage passes through pile of coalescence plates, tortuous channel of corrugated plate forces the flow to form a state approximate to sine wave so as to increase the collision probability among oil droplets and promote the coalescence of little oil droplets. Flow directions are changing constantly due to waved corrugated plate to increase the collision probability and make little oil droplets get bigger. According to Stocks formula, settling velocity of oil droplets is in direct proportion to the squared value of the particle size of oil droplets. Moreover, settling of oil droplets is accelerated due to smaller superficial area of big oil droplets and relatively smaller surface tension of water to reach the objective of oil-water separation.

The beneficial effects of the invention are as follows.
(1) Idea of stepwise fractional separation is adopted in the design according to the nature of Fischer-Tropsch synthesized oil-water. In other words, PPI and droplet agglomeration methods are adopted to make fast separation for most of free-state and disperse oil water mixtures. Some emulsified crude oil water mixtures (taking up 0.1-3% of total quantity) are processed by in-depth separation of conjugate fiber weaved module. By comparison, current gravity settling method has the advantages of fast separation velocity and high efficiency. Besides, this method adopting stepwise fractional separation gives full play to high efficiency and adaptability of each technology. For example, water content in the oil is reduced after the primary separation. By means of coalescence-separation of conjugate fibers, conjugate fiber module can make fast and efficient separation of oil with low water content. Moreover, long-term operation of this module can be protected;
(2) Oil and gas washing is integrated into the primary separator adopting T-shaped liquid-gas separation technology. On one hand, fast fluid degassing is realized through centrifugal force caused by liquid in T-shaped tube. The structure is simple and separation efficiency is higher than that of gravity settling separation. On the other hand, flow rate at the entrance of T-shaped tube is controlled to 3-6m/s for washing and mixing in the T-shaped separator. Gas-liquid phase gets influenced by centrifugal force at rotating speed in the T-shaped tube. Liquid flows from inside to the outside on radial section and from the top to the bottom on vertical section due to oil-water density difference. Secondary washing function and washing function in two processes of combination as well as mixing and segregation can be completed;
(3) Two functions of the primary oil dehydration and primary water deoiling are integrated into a primary separator to reduce one device. Required auxiliary pipes, controllers, valves and land occupation are reduced as well to lower the investment.
(4) What is more important, this invention make combining integration of CPI, droplet agglomerationdroplet agglomeration and separation technology of conjugate fibers according to the nature of Fischer-Tropsch synthesized oil-water. Separation time is shorter and separation efficiency is higher (but emulsified oil can't be separated by gravity settling). The resource utilization rate is improved, oil content of sewage is reduced, and disposal difficulty of the next process is lowered.

The method of this invention is simple, efficient and adaptable. It satisfies the requirement on separation of Fischer-Tropsch synthesized oil-water and integrates the function of hydrocarbon components in washing and recycling gas. It can be used in oil-water separation in the process of the same kind in coal chemical industry.

### Brief Description of drawingDrawings

Drawing 1 is the schematic diagram of CPI fast deoiling or dehydration (perforated at the bottom);
Drawing 2 is the process flow diagram of Example 1;
Drawing 3 is the structural diagram of devices used in Example 1.

### Description of numeral symbols

1: Hydrocarbon gas; 2: Oil containing 0.5-6% synthetic water; 3: Gas after dehydrocarbon;
4: Sewage containing 0.05-0.5% oil; 5: Sewage containing 0.03-0.6% oil;
6: Oil containing 0.05-0.5% water; 7: Oil containing 0.03-0.6% water;
8: Oil containing less than 0.02% water; 9: Oil containing less than 0.02% water (exclude slop oil tank);
10: Sewage containing less than 0.01% oil; 101: Entrance of water-cut oil;
20: Entrance of hydrocarbon gas; 30: Gas and liquid mixer; 40: T-shaped liquid-gas separator;
50: CPI module of fast dehydration; 60: Hydrophilic droplet agglomeration module; 70: Clapboard;
80: Gas phase outlet; 90: Oleophilic droplet agglomeration module; 102: CPI module of fast deoiling;
110: Entrance of oily wastewater; 120: Water drum; 13-1 & 13-2: Deoiling modules of conjugate fibers;
14-1 & 14-2: Dehydration modules of conjugate fibers.

### Detailed Description of Embodiments

The method and the device of this invention will be described below with reference to the Example. The example only makes further explanation of this invention and does not limit the protective scope of this invention.

### Contrast example 1

Flow rates of light oil and oily wastewater in Fischer-Tropsch synthesis device are 50t/h and 7t/h after passing through high-pressure separator in a coal chemical plant. Light oil contains 3-4% water and oily wastewater contains 2-3% oil. Flow rate of generated rich hydrocarbon gas is about 4t/h. Currently, the following method is adopted for oil-water separation. Light oil containing about 3-4% water after separation in high-pressure separator enters into primary oil-water separator for settling dehydration for 0.5 hour, and light oil containing about 0.5-1.5% water after settlement is sent to drain sump for long-term dehydration for at least 8 hours. Light oil containing less than 0.1% water is sent to oil tank; oily synthetic water isolated on the bottom of high-pressure separator enters into sewage buffer tank and it gets through mixed buffering with water settled by the primary oil-water separator in sewage buffer tank. Later, oily synthetic water is sent to skimming tank via pump for long-term settling and deoiling for over 24 hours, and sewages containing about 0.05% oil after oil removal is sent to sewage disposal plant. Sump oil recycled in the top of skimming tank is sent to slop tank underground for recovery and be used after disposal. Because drain sump and skimming tank occupy large land, these two devices shall be placed outside core production units. The pump is used to deliver oil and water to core production units via pipeline in the middle.

Due to technical reason of Fischer-Tropsch synthesis, water-contained oil and oil-contained water exist in high-pressure separator including the phenomenon of oil-water emulsification. Thus, current separation method conventionally adopts gravity settling to improve oil-water separation effect through long-term settlement. But it has problems in large equipment size and low separation efficiency. Moreover, the equipment occupies large area, and costs of related auxiliary basis and pipes are high. Thus, transformation becomes necessary.

### Example 1

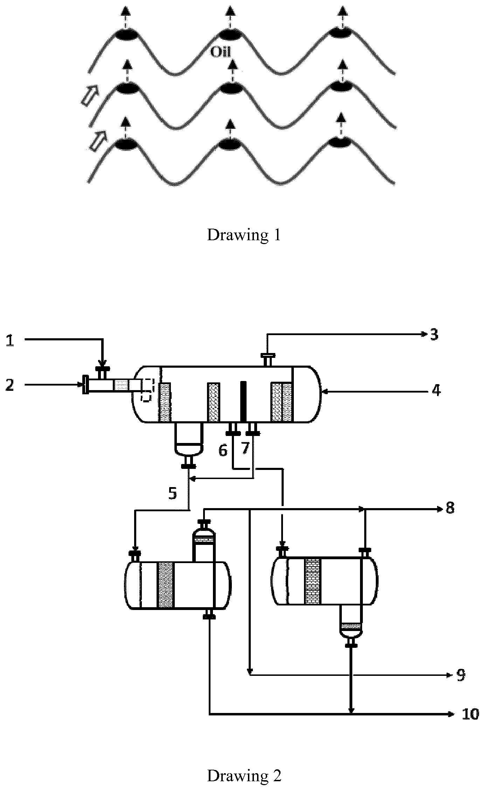

Technological process of this example is shown in Drawing 2. The method of two stage separation is adopted for oil-water separation. After mixed washing of oil 2 containing 0.5-6% synthetic water (flow rate is 1-3m/s at the entrance) and hydrocarbon gas 1 containing 0.01- 2.8% trace hydrocarbon, light oil entering into trace hydrocarbon is fed into the left-side end socket of the primary oil-water separator; sewage 4 containing 0.05- 0.5% oil is sent to the right-side end socket of the primary oil-water separator; the operating pressure of the primary oil-water separator is 0.3-4.5MPa and the temperature is 20-60°C.

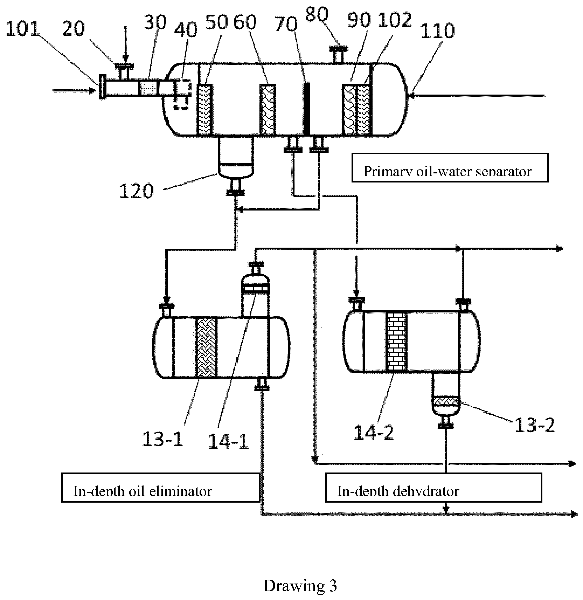

Afterwards, each component enters into primary oil-water separator to realize fast liquid-gas separation in T-shaped liquid-gas separator 40 (shown in Drawing 3) and isolated gas 3 after dehydrocarbon is discharged from the top of the primary oil-water separator.

Water-contained light oil flows from the left-side end socket of the primary oil-water separator to the right-side one at the velocity of 0.005-0.02 m/s. Fast dehydration is done through fast dehydration CPI module 50 and hydrophilic droplet agglomeration module 60 to isolate water droplets with particle size larger than 30µm. Light oil after separation only contains 0.05-0.5% water and continues to flow to the right side to expel from the left side of clapboard 70 and enters into in-depth dehydrator. Water droplets with 3-30µm particle sizes are deprived in in-depth dehydrator to obtain the light oil with water content less than 0.02% as shown in 8 and 9 in Drawing 2;

Sewage 4 containing 0.05-0.5% oil flows from the left to the right-side end socket of the primary oil-water separator and passes through fast deoiling CPI module 102 and oleophilic droplet agglomeration module 90 successively for rapid oil removal. Oil droplets with particle size larger than 25µm are separated. Sewage 7 contains 0.03-0.6% oil after separation and continues to flow from the left to the right side of clapboard 70. Light oil after separation on the upper side and left side of clapboard 70 is discharged into in-depth oil eliminator, in which oil droplets with 1-25µm particle size is removed. Till now, the oil content of sewage is less than 0.01% as shown in 10 in Drawing 2.

In combination with Drawing 3, specific process is as follows. Light oil containing 3-4% water after separation in high-pressure separator passes through water-cut oil inlet 101 and gets down-flow washing with rich hydrocarbon gas coming from the entrance 20 of hydrocarbon gas in air and liquid mixer 30. Afterwards, light oil and rich hydrocarbon gas enter into the T-shaped liquid-gas separator at the left entrance of the primary oil-water separator for liquid-gas separation and the second washing and dehydrocarbon. Rich hydrocarbon gas is discharged from gas phase outlet after purification; Light oil containing water passes through fast dehydration CPI module 50 with a length of 400mm for fast deprivation of free water with particle size larger than 80µm, and then passes through hydrophilic droplet agglomeration module 60 with a length of 200mm for coalescence growth and interception of water droplets carried by oil. Droplet agglomeration growth, interception and separation of free water with particle size larger than 30µm are all completed in this process. The flow rate of liquid phase in this process is controlled to a rate no more than 0.02m/s. Oil is discharged from the right side of clapboard 70 once the water content in oil is no more than 0.16% after separation. Isolated water is settled and sent to water drum 120 due to function of density difference; sewage containing about 2-3% oil enters from the right side of the primary separator, passes through fast deoiling CPI module 102 and oleophilic droplet agglomeration module 90 for fast deoiling, and flows to the right side of clapboard 70. The flow rate of liquid phase in this process is controlled to a rate no more than 0.025m/s. Isolated sump oil is discharged from the upper part of the partition plate 70 together with the light oil separated after the left side of the partition plate. Oil content in sewage after separation is no more than 0.1% and is discharged from the right side of clapboard 70 to in-depth oil eliminator; light oil after separation in the primary separator enters in-depth dehydrator for deep dehydration through dehydration module 14-2 of conjugate fibers (including hydrophilic fiber and oleophilic fiber) set in in-depth dehydrator. Separation of oil-contained water droplets with 3-30µm particle sizes is realized in this process. Water content of light oil is less than 0.02%. Little water deprived is sent to sewage disposal plant once oil content in water is no more than 0.01% after disposal through deoiling module 13-2 of conjugate fibers (including hydrophilic fiber and oleophilic fiber); sewage enters into in-depth oil eliminator after separation in the primary separator and passes through deoiling module 13-1 of conjugate fibers (including hydrophilic fiber and oleophilic fiber) set in in-depth oil eliminator for deep deoiling. Separation of water-contained oil droplets with 1 25µm particle sizes is realized in this process. Sewage is sent to disposal plant for treatment once oil content is less than 0.005%. Little sump oil isolated is sent to underground slop tank for recovery once water content in sump oil is less than 0.05%; the amount of hydrophilic fibers is 12% of that of oleophilic fibers in conjugated fiber water removal module while the amount of oleophilic fibers is 16% of that of hydrophilic fibers in conjugated fiber oil removal module. Liquid-phase flow rate is no more than 0.022m/s in in-depth oil eliminator while it is no more than 0.015m/s in in-depth dehydrator.

Implementation effect indicates that the equipment occupies less land and separation efficiency improves after transformation by the method provided by this invention. Total separation time of oil dehydration is reduced from 8.5 hours to less than 10 minutes while that of deoiling is reduced from 24 hours to less than 8 minutes. Investment is lowered and equipments are reduced and arranged in the area of production units to reduce the costs of external transport of auxiliary pump, pipeline and related facilities; secondly, separation efficiency is improved. Water content in oil after in-depth deoiling and dehydration is lowered to less than 200ppm and the oil content in water is lowered to less than 50ppm. By contrast of 1000ppm water in oil and 500ppm oil in water in the previous big tank settlement, recovery efficiency of oil is improved and investment to subsequent sewage treatment facility is lowered, which plays an important role in energy conservation, cost reduction and resource recovery; Part of hydrocarbons are recycled through gas washing facility set by the primary separator at last, which brings about economic benefit.

What mentioned above is merely relatively good example of this invention but is not used to limit the implementation scope of this invention. In other words, any equivalent change and ornament made on basis of the scope of this invention's application for a patent belong to technology category of this invention.

## Claims

1. A method of stepwise oil-water separation by oil-gas washing in Fischer-Tropsch process, comprising the steps of:
1) after mixed washing of light oil containing 0.5-6% synthesized water and low gas containing 0.01-2.8% trace hydrocarbon, feeding light oil containing trace hydrocarbon into the left-side end socket of the primary oil-water separator, and sending sewage containing 0.05-0.5% oil to the right-side end socket of the primary oil-water separator, wherein the operating pressure of the primary oil-water separator is 0.3-4.5MPa and the temperature is 20-60°C,
2) after each component in step 1) enters into the primary oil-water separator, realizing fast liquid-gas separation in the T-shaped liquid-gas separator, wherein the low gas separated is discharged from the top of the primary oil-water separator; wherein
water containing light oil flows from the right-side end socket of the primary oil-water separator towards right at the velocity of 0.005-0.02 m/s, and undergoes fast dehydration by successively going through the first CPI oil-water fast separation module and hydrophilic droplet agglomeration module to isolate water droplets with particle size larger than 30µm, whereinlight oil after separation only contains 0.05-0.5% water and continues to flow to towards right to be discharged from the left side of a partition plate and enters into an in-depth dehydrator, wherein water droplets with 3-30µm particle sizes are removed in the in-depth dehydrator to get light oil with water content less than 0:02%; and
oily sewage flows from the right-side end socket of the primary oil-water separator towards left and passes through the second CPI oil-water fast separation module and oleophilic droplet agglomeration module successively for rapid oil removal,wherein oil droplets with particle size larger than 25µm are separated, and sewage contains 0.03-0.6% of oil after separation and continues to flow towards left to the right side of the partition plate, and the sump oil is discharged from the upper part of the partition plate together with the light oil separated after the left side of the partition plate, and the separated sewage water enters the in-depth oil eliminator, in which oil droplets with 1-25µm particle size is removed, and the oil content of sewage is less than 0.01% at this moment.

2. Method of stepwise oil-water separation according to claim 1, wherein in-depth dehydrator in step 2) contains conjugated fiber water removal module including hydrophilic fiber and oleophilic fiber, the amount of hydrophilic fiber is 5-15% of that of oleophilic fiber in the conjugated fiber water removal module, the in-depth oil eliminator contains conjugated fiber oil removal module including hydrophilic fiber and oleophilic fiber and the amount of oleophilic fiber is 10-20% of that of hydrophilic fiber in conjugated fiber oil removal module.

3. to claim 1, wherein light oil and low gas are mixed in step 1) in a direction that is the same with or opposite to the flowing direction of oil and gas, and a conventional gas-liquid mixer is set after injection.

4. Method of stepwise oil-water separation according to claim 1, wherein the oil-water mixture flows in a velocity of 3 to 6m/s at entrance of the T-shaped liquid-gas separator in step 1).

5. Method of stepwise oil-water separation according to claim 1, wherein water drum exists between the first CPI oil-water fast separation module and hydrophilic droplet agglomeration module in step 2); and the second CPI oil-water fast separation module and oleophilic droplet agglomeration module are connected with each other.

6. Method of stepwise oil-water separation according to claim 1, wherein the hydrophilic droplet agglomeration module and the first and second CPI fast separation modules in step 2) are made of modified Teflon, polypropylene or stainless steel material.

7. Method of stepwise oil-water separation according to claim 1, wherein there is water drum existing in the bottom of in-depth dehydrator in step 2) and conjugated fiber oil removal module is set at the exit, and there is water drum existing on the top of in-depth oil eliminator and conjugated fiber water removal module is set at the exit.

## Patentansprüche

1. Verfahren der schrittweisen Öl-Wasser-Trennung durch Öl-Gas-Waschen in einem Fischer-Tropsch-Verfahren, umfassend die Schritte:
1) nach gemischtem Waschen von Leichtöl, das 0,5 bis 6 % synthetisiertes Wasser enthält, und Niedergas, das 0,01 bis 2,8 % Spuren-Kohlenwasserstoff enthält, Speisen von Leichtöl, das Spuren-Kohlenwasserstoff enthält, in den Stutzen des linksseitigen Endes des primären Öl-Wasser-Separators und Schicken von Abwasser, das 0,05 bis 0,5 % Öl enthält, zum Stutzen des rechtsseitigen Endes des primären Öl-Wasser-Separators, wobei der Betriebsdruck des primären Öl-Wasser-Separators 0,3 bis 4,5 MPa beträgt und die Temperatur 20 bis 60 °C beträgt,
2) nachdem jede Komponente in Schritt 1) in den primären Öl-Wasser-Separator eintritt, Durchführen von schneller Flüssigkeit-GasTrennung in dem T-förmigen Flüssigkeit-Gas-Separator, wobei das abgetrennte Niedergas vom oberen Ende des primären Öl-Wasser-Separators abgelassen wird; wobei
Wasser, das Leichtöl enthält, von dem Stutzen des rechtsseitigen Endes des primären Öl-Wasser-Separators mit der Geschwindigkeit von 0,005 bis 0,02 m/s nach rechts fließt und schnelle Entwässerung durch nacheinander erfolgendes Hindurchgehen durch das erste CPI-Öl-Wasser-Schnelltrennungsmodul und das Modul für hydrophile Tröpfchenagglomeration durchläuft, um Wassertröpfchen mit einer Teilchengröße von größer als 30 µm zu isolieren, wobei Leichtöl nach Abtrennung nur 0,05 bis 0,5 % Wasser enthält und weiterhin nach rechts fließt, um von der linken Seite eines Trennblechs abgelassen zu werden, und in einen Tiefen-Entwässerer (engl. in-depth dehydrator) eintritt, wobei Wassertröpfchen mit Teilchengrößen von 3 bis 30 µm in dem Tiefen-Entwässerer entfernt werden, um Leichtöl mit einem Wassergehalt von weniger als 0,02 % zu erhalten; und
öliges Abwasser von dem Stutzen des rechtsseitigen Endes des primären Öl-Wasser-Separators nach links fließt und zur raschen Ölentfernung durch das zweite CPI-Öl-Wasser-Schnelltrennungsmodul und das Modul für oleophile Tröpfchenagglomeration fließt, wobei Öltröpfchen mit einer Teilchengröße von größer als 25 µm abgetrennt werden, und Abwasser nach Abtrennung 0,03 bis 0,6 % Öl enthält und weiterhin nach links zur rechten Seite des Trennblechs fließt und das Sumpföl zusammen mit dem Leichtöl, das hinter der linken Seite der Trennblechs abgetrennt wird, von dem oberen Teil des Trennblechs abgelassen wird und das abgetrennte Abwasser in den Tiefen-Ölbeseitiger (engl. in-depth oil eliminator) eintritt, in dem Öltröpfchen mit einer Teilchengröße von 1 bis 25 µm entfernt werden und der Ölgehalt von Abwasser zu diesem Zeitpunkt weniger als 0,01 % beträgt.

2. Verfahren der schrittweisen Öl-Wasser-Trennung nach Anspruch 1, wobei der Tiefen-Entwässerer in Schritt 2) ein konjugiertes Faser-Wasserentfernungsmodul einschließlich hydrophiler Faser und oleophiler Faser enthält, die Menge an hydrophiler Faser 5 bis 15 % derjenigen von oleophiler Faser in dem konjugierten Faser-Wasserentfernungsmodul beträgt, der Tiefen-Ölbeseitiger konjugiertes Faser-Ölentfernungsmodul einschließlich hydrophiler Faser und oleophiler Faser enthält und die Menge an oleophiler Faser 10 bis 20 % derjenigen von hydrophiler Faser im konjugierten Faser-Ölentfernungsmodul beträgt.

3. Verfahren der schrittweisen Öl-Wasser-Trennung nach Anspruch 1, wobei Leichtöl und Niedergas in Schritt 1) in einer Richtung gemischt werden, welche die gleiche wie die oder entgegengesetzt der Fließrichtung von Öl und Gas ist, und ein herkömmlicher Gas-Flüssigkeits-Mischer nach Injektion gestellt wird.

4. Verfahren der schrittweisen Öl-Wasser-Trennung nach Anspruch 1, wobei das Öl-Wasser-Gemisch am Eingang des T-förmigen Flüssigkeit-Gas-Separators in Schritt 1) mit einer Geschwindigkeit von 3 bis 6 m/s fließt.

5. Verfahren der schrittweisen Öl-Wasser-Trennung nach Anspruch 1, wobei zwischen dem ersten CPI-Öl-Wasser-Schnelltrennungsmodul und dem Modul für hydrophile Tröpfchenagglomeration in Schritt 2) ein Wasserfass vorhanden ist; und das zweite CPI-Öl-Wasser-Schnelltrennungsmodul und das Modul für oleophile Tröpfchenagglomeration miteinander verbunden werden.

6. Verfahren der schrittweisen Öl-Wasser-Trennung nach Anspruch 1, wobei das Modul für hydrophile Tröpfchenagglomeration und das erste und das zweite CPI-Schnelltrennungsmodul in Schritt 2) aus modifiziertem Teflon, Polypropylen oder nichtrostendem Stahlmaterial hergestellt sind.

7. Verfahren der schrittweisen Öl-Wasser-Trennung nach Anspruch 1, wobei ein Wasserfass im Boden des Tiefen-Entwässerer in Schritt 2) vorhanden ist und das konjugierte Faser-Ölentfernungsmodul am Ausgang gestellt wird und ein Wasserfass am oberen Ende des Tiefen-Ölbeseitigers vorhanden ist und ein konjugiertes Faser-Wasserentfernungsmodul am Ausgang gestellt ist.

## Revendications

1. Procédé d'une séparation huile-eau étape par étape par lavage d'huile-gaz dans un procédé de Fischer-Tropsch, comprenant les étapes de :
1) après lavage mixte de l'huile légère contenant de 0,5 à 6 % d'eau synthétisée et de gaz léger contenant de 0,01 à 2,8 % d'un hydrocarbure sous forme de trace, alimentation de l'huile légère contenant un hydrocarbure sous forme de trace dans l'embout d'extrémité gauche du séparateur huile-eau principal, et envoi des eaux usées contenant de 0,05 à 0,5 % d'huile vers l'embout d'extrémité droite du séparateur huile-eau principal, dans lequel la pression de fonctionnement du séparateur huile-eau principal est de 0,3 à 4,5 MPa et la température est de 20 à 60 °C,
2) après l'entrée de chaque composant de l'étape 1) dans le séparateur huile-eau principal, réalisation d'une séparation rapide liquide-gaz dans le séparateur liquide-gaz en forme de T, dans lequel le gaz léger séparé est évacué depuis le haut du séparateur huile-eau principal ; dans lequel
l'huile légère contenant de l'eau s'écoule depuis l'embout d'extrémité gauche du séparateur huile-eau principal vers la droite à la vitesse de 0,005 à 0,02 m/s, et subit une déshydratation rapide en passant successivement à travers les premiers module de séparation rapide huile-eau CPI et module d'agglomération de gouttelettes hydrophiles pour isoler les gouttelettes d'eau ayant une taille de particule supérieure à 30 µm, dans lequel l'huile légère après la séparation contient uniquement 0,05 à 0,5 % d'eau et continue à s'écouler vers la droite pour être évacuée depuis le côté gauche d'une plaque de séparation et entre dans un appareil de déshydratation en profondeur, les gouttes d'eau ayant des tailles de particules de 3 à 30 µm sont éliminées dans l'appareil de déshydratation en profondeur pour obtenir une huile légère ayant une teneur en eau inférieure à 0,02 % ; et
les eaux usées huileuses s'écoulent depuis l'embout d'extrémité droite du séparateur huile-eau principal vers la gauche et passe à travers les seconds module de séparation rapide huile-eau CPI et module d'agglomération de gouttelettes oléophiles successivement pour une élimination rapide de l'huile, dans lequel les gouttelettes d'huile ayant une taille de particule supérieure à 25 µm sont séparées, et les eaux usées contiennent de 0,03 à 0,6 % d'huile après la séparation et continuent à s'écouler vers la gauche vers le côté droit de la plaque de séparation, et l'huile de carter est évacuée depuis la partie supérieure de la plaque de séparation avec l'huile légère séparée après le côté gauche de la plaque de séparation, et l'eau des eaux usées séparée entre dans l'appareil d'élimination d'huile en profondeur, dans lequel les gouttelettes d'huile ayant une taille de particule de 1 à 25 µm sont éliminées, et la teneur en huile des eaux usées est inférieure à 0,01 % à ce stade.

2. Procédé d'une séparation huile-eau étape par étape selon la revendication 1, dans lequel l'appareil de déshydratation en profondeur de l'étape 2) contient un module d'élimination d'eau à base de fibres conjuguées comprenant une fibre hydrophile et une fibre oléophile, la quantité de la fibre hydrophile est de 5 à 15 % de celle de la fibre oléophile dans le module d'élimination d'eau à base de fibres conjuguées, l'appareil d'élimination d'huile en profondeur contient un module d'élimination d'huile à base de fibres conjuguées comprenant une fibre hydrophile et une fibre oléophile et la quantité de la fibre oléophile est de 10 à 20 % de celle de la fibre hydrophile dans le module d'élimination d'huile à base de fibres conjuguées.

3. Procédé d'une séparation huile-eau étape par étape selon la revendication 1, dans lequel l'huile légère et le gaz léger sont mélangés dans l'étape 1) dans une direction qui est la même que ou opposée à la direction d'écoulement de l'huile et du gaz, et un mélangeur gaz-liquide classique est mis en oeuvre après l'injection.

4. Procédé d'une séparation huile-eau étape par étape selon la revendication 1, dans lequel le mélange huile-eau s'écoule avec une vitesse de 3 à 6 m/s à l'entrée du séparateur liquide-gaz en forme de T de l'étape 1).

5. Procédé d'une séparation huile-eau étape par étape selon la revendication 1, dans lequel une cuve d'eau est présente entre les premiers module de séparation rapide huile-eau CPI et module d'agglomération de gouttelettes hydrophiles de l'étape 2) ; et les seconds module de séparation rapide huile-eau CPI et module d'agglomération de gouttelettes oléophiles sont connectés l'un à l'autre.

6. Procédé d'une séparation huile-eau étape par étape selon la revendication 1, dans lequel le module d'agglomération de gouttelettes hydrophiles et les premier et second modules de séparation rapide huile-eau CPI de l'étape 2) sont en Téflon modifié, en polypropylène ou en un matériau en acier inoxydable.

7. Procédé d'une séparation huile-eau étape par étape selon la revendication 1, dans lequel une cuve d'eau est présente au fond de l'appareil de déshydratation en profondeur de l'étape 2) et un module d'élimination d'huile à base de fibres conjuguées est mis en oeuvre à la sortie, et une cuve d'eau est présente sur le dessus de l'appareil d'élimination d'huile en profondeur et un module d'élimination d'eau à base de fibres conjuguées est mis en oeuvre à la sortie.
